# EUROPEAN PATENT SPECIFICATION

(11) **EP 1 866 483 B1**
(45) Date of publication and mention of the grant of the patent: **07.05.2014**
(21) Application number: 06710583.3
(22) Date of filing: 16.03.2006
(51) Int. Cl.: E02B 17/02, E02D 15/08, E02D 23/02, E02D 23/16, E02D 25/00, E02D 27/52, E02B 3/06

(54) **METHOD FOR THE REALIZATION OF ARTIFICIAL ISLANDS, EMBANKMENTS, PIERS, BREAKWATERS, PLATFORMS, OR SIMILAR STRUCTURES IN BODIES OF WATER AND STRUCTURES OBTAINED**
VERFAHREN ZUR REALISIERUNG VON KÜNSTLICHEN INSELN, DEICHEN, PIEREN, WASSERBRECHERN, PLATTFORMEN ODER ÄHNLICHEN STRUKTUREN IN WASSERMENGEN UND ERHALTENE STRUKTUREN
PROCEDE DE CONSTRUCTION D'ILES, DE DIGUES, DE JETEES, DE BRISE-LAMES, DE PLATEFORMES, OU D'AUTRES STRUCTURES SEMBLABLES ARTIFICIELLES DANS DES PLANS D'EAU ET STRUCTURES OBTENUES

(30) Priority: 18.03.2005 IT PI20050030
(43) Date of publication of application: 19.12.2007
(73) Proprietor: Sposito, Francesco, 56010 Ghezzano (PI) (IT)
(72) Inventor: Sposito, Francesco, 56010 Ghezzano (PI) (IT)
(74) Representative: Gritschneder, Martin
(86) International application number: PCT/IB2006/000650
(87) International publication number: WO 2006/097841

(56) References cited:
- FR-A- 779 516
- GB-A- 656 945
- JP-A- 55 019 332
- JP-A- 57 092 224
- JP-A- 61 200 220
- JP-B- 49 046 965
- NL-C- 85 684
- NL-C2- 1 010 394
- US-A- 3 456 413
- US-A- 3 464 212
- PATENT ABSTRACTS OF JAPAN vol. 010, no. 191 (M-495), 4 July 1986 (1986-07-04) & JP 61 036421 A (YAMAHA KAKO KENSETSU KK), 21 February 1986 (1986-02-21)

## Description

### Field of the Invention

The present invention relates to a method for the realization of assembled structures, in particular building structures, such as artificial islands, embankments, piers, breakwaters, platforms or similar structures, in a body of water as a river, a lake, a sea, a marsh or others.

### Background of the Invention

As known there are several kinds of supporting structures to make buildings, for instance oil platforms, in bodies of water such as rivers, seas, lakes or others.

A first kind of supporting structure for the realizations of building structures in bodies of water comprises a set of tubular elements creating a grid frame which is fixed to the bottom of the selected body of water. To this end, the installing phase is carried out through bulky and expensive devices and machineries in order to build the foundation of the supporting structure. That phase is particularly delicate as it is intended to firmly fix the supporting structure to the bottom of the body of water in order to prevent it from being damaged or swept away by the water flow. That action is performed, for instance, through specific drilling machines, installed in boats, which make holes for fixing to the bottom. Anyhow, in spite of such care the supporting structures made have a burden limit which cannot be overcome to prevent the breakdown of the whole structure. This matter, together with high installation costs and with the problems they bring forth, have reduced the spreading of such supporting structures which are used only to build offshore oil platforms.

A different type of supporting structure consists of a floating platform which is the base on which the further building structure is built. Anyway, in this case the floating structure cannot support weighty load, so that it has few possible utilizations.

Further solutions provide the realization of artificial islands through the sequential insertion of material in definite and bordered regions of the body of water.

A method according to the preamble of claim 1 is for instance known from JP-49-046965-B. Another method is know from FR-779516-A.

### Summary of the Invention

The main object of the invention is to provide a method for the realization of artificial islands, embankments, piers, breakwaters, platforms or similar structures in bodies of water, such as rivers, lakes, seas, marshes or others, which is cheaper and easier to carry on than the solutions of the prior art.

This one and further objects are attained through a method for the realization of an artificial island, an embankment, a pier, a breakwater, a platform or similar structures in bodies of water, according to claim 1, comprising i.a. the phases of:
- locating, about the site where has to be installed, a floating hollow basement made of a bottom and side walls and provided with an upper aperture,
- laying down from the top a filling material in the internal volume of said basement through said upper aperture until the basement itself is partly under water,
- placing, on said lowered basement, a hollow structural element made of side walls, an upper aperture and a lower aperture, the walls of the present element and the walls of the basement having the same dimensions and the same shape in plan,
- laying down filling material through the upper aperture of said structural element so that said basement (and the structural element) lower again and are partly under water,
- repeating the previous phases until the bottom of the basement gets in contact with the bottom of the body of water,
- filling the pillar made of the basement and the structural elements with filling material until a firm flat surface is obtained, said flat surface being over or under water.

In particular, it is possible to realize many structural pillars according to the above set of phases; at the top of the pillars, placed side by side, a continuous flat supporting surface is obtained.

Advantageously, in the case that the site of installation is subject to strong water current, the first pillar is placed with help of at least one cable fixed to the bottom of the body of water by drilling. In that way, the pillar is led, while immerging, to get the desired position at the bottom.

With reference to a further object of the present invention, an artificial island, an embankment, a pier, a breakwater, a platform or a similar structure which can be installed in a body of water, according to claim 2 is provided, which provides pillars comprising:
- a hollow floating basement, made of a bottom and side walls, where is entered from the top a filling material in order to cause a partial submersion of the basement itself,
- one or more hollow structural elements made of side walls, an upperside aperture and an underside aperture, placed on top of the basement, one on top of the following, filled with filling material up to obtain a firm flat surface, said flat surface being over or under water.

In a possible embodiment of the invention, an artificial island, an embankment, a pier, a breakwater, a platform or a similar structure provides a plurality of pillars joined each other through structural elements being at the top of the pillars, in order to realize a continuous firm flat surface.

According to the invention, at least one side wall of the pillar is provided with joining means apt to link with joining means of the pillar which is built adjacent to the first one so that the structural elements are guided during positioning.

The joining means of a pillar provide at least a longitudinal seat to fit side protrusions of the structural elements of a pillar placed adjacent to it. In this way, once the first pillar has been built, to build the following pillar is made easier and is led by the presence of the joining means, so that the pillar is properly placed.

Preferably, the joining means of two side by side pillars make a dovetail joint. The artificial island, or similar structure, provides a plurality of side by side pillars whose structural elements are placed through their joining means.

Advantageously, coming structural elements of each pillar provide reference means apt to facilitate their mutual arrangement.

In particular, it is provided a container to stock the filling material shipped to the installation site.

Advantageously, each structural element and the basement can be made of sheet metal, wood, concrete material or any other suitable material.

The filling material can be any conglomerate, as concrete, bitumen, waste material of various industrial processes and any other material.

In a possible embodiment, the basement has at least one beneath portion apt to realize one or more steps useful to fit the conformation of the bottom of the body of water.

Furthermore, the bottom of said basement can be provided with fastening means, for instance a pile shoe, apt to firmly fix said basement to the bottom of the body of water.

According to the invention, the basement and the structural elements have the same measures and the same shape in top view.

Advantageously, the filling material is reinforced with a proper material to increase its strength.

Finally, the structural elements can be partly filled with the filling material to realize a partially hollow pillar.

### Brief Description of the Drawings

The invention will now be described by way of examples, with reference to the accompanying drawings, in which:
- Figures 1A and 1B show, in axonometric projection, respectively a basement and a structural element of a first embodiment of the artificial island or similar structure of the invention;
- Figures 2A and 2B show, in axonometric projection, respectively a basement and a structural element of a different embodiment of the artificial island or similar structure of the invention;
- Figure 2C shows, in a bottom axonometric projection, the basement of fig. 1A in a different configuration where it is provided with pile shoes;
- Figures from 3 to 6 schematically show, in an elevated lateral axonometric projection, a likely sequence of phases to build a pillar of the artificial island or similar structure acording to the invention;
- Figure 7 schematically shows, in an elevated lateral axonometric projection, a phase of the realization of a second pillar being sideways placed to the first one through proper joining means;
- Figures 8 and 9 show, in plan view, two possible configurations of the structural elements which are apt to join together to build the relating pillars;

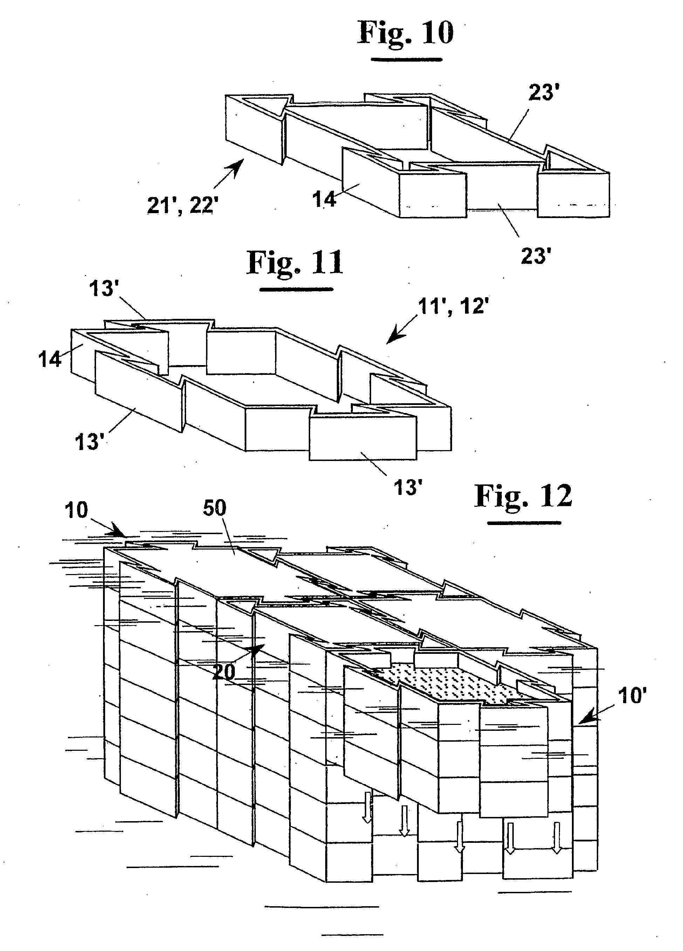

- Figures 10 and 11 respectively show in axonometric projection the structural elements of figures 8 and 9;
- Figure 12 shows, in an elevated lateral axonometric projection, an artificial island made through the structural elements of figures 10 and 11;

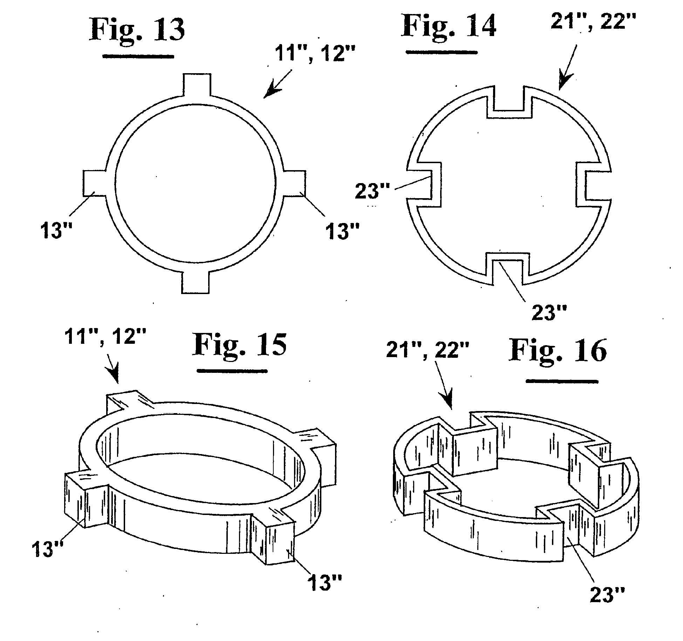

- Figures 13 and 14 show, in a plan view, further possible configurations of the structural elements of figures 1 and 2;
- Figures 15 and 16 respectively show, in axonometric projection, the structural elements of figures 13 and 14.

### Description of Preferred Embodiments

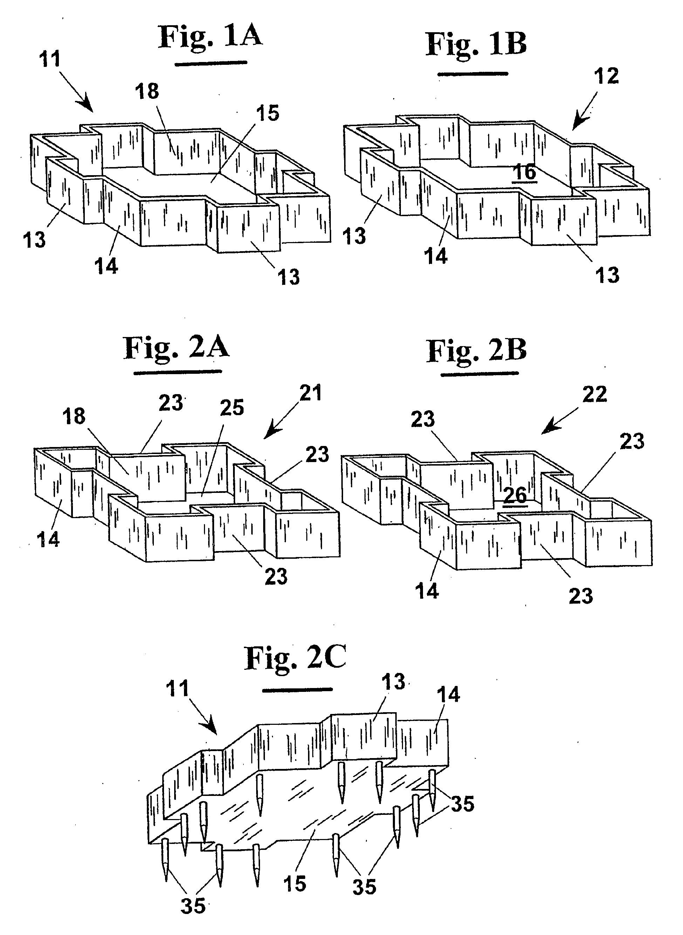

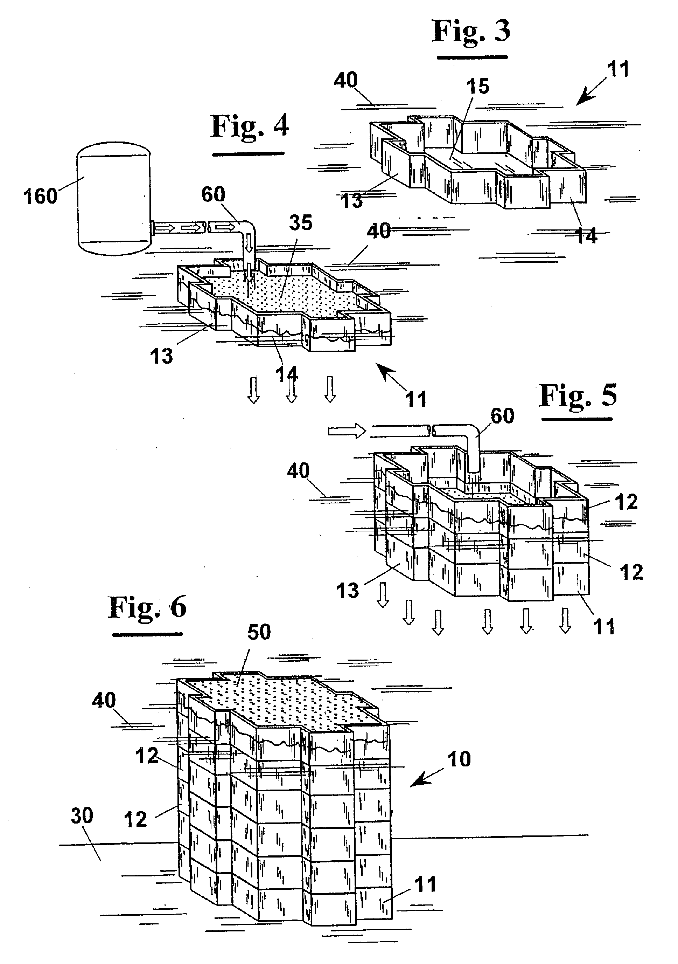

In figure 1A is shown a floating basement 11 of a pillar 10, of the artificial island or similar structure according to the invention, to be installed in a body of water as a river, a lake, a sea, a marsh, etc. (figure 6). The basement 11 is a hollow part made of a bottom 15, side walls 14 which are the borders of the cavity approachable from the outside through an opening 18. The basement is placed in its installation position 40 (figure 3), through, for instance, a crane not shown in figure.

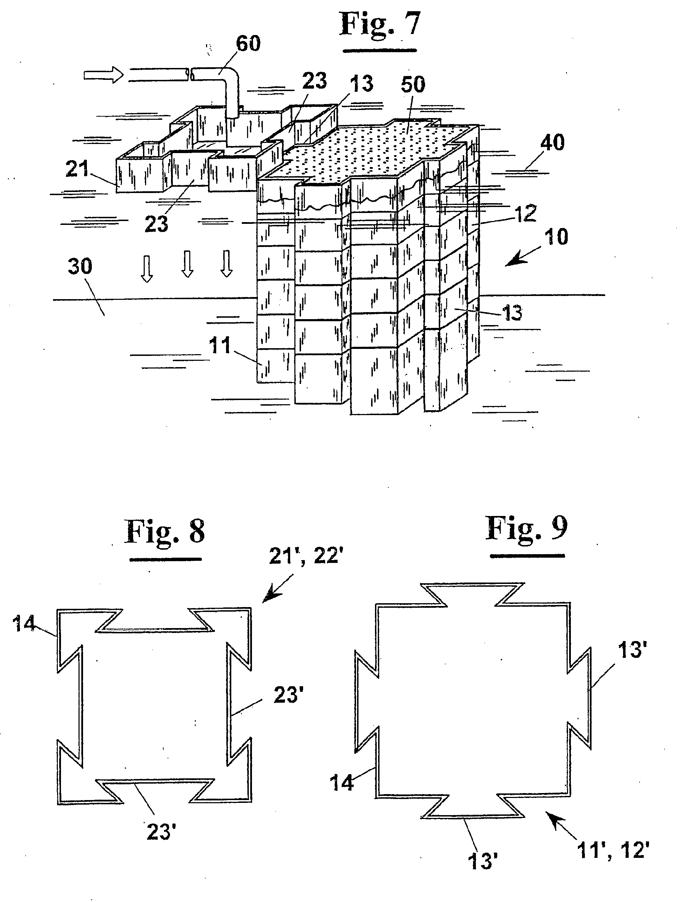

Afterwards, through, for example, a duct 60 connected to a container 160, placed for instance on a ship, is entered in the basement 15 a certain quantity of filling material 35 until it causes a partial submersion of the basement itself (figure 4). On the basement are then disposed, one by one, structural elements 12 (figure 5). These elements are provided with side walls 14 of the same shape and dimensions of the basement 11 and they are firmly fixed to one another in order to provide sealing and to avoid seepage of water inside the pillar 10 under construction. The above process is repeated until the basement 11 gets the bottom 30 of the body of water (figure 6). In particular, the basement 11 may be provided with fastening means, for instance pile shoes 35, mounted in the bottom surface 15 of the basement which mates the bottom of the body of water. In this way, a tight fastening of the basement 11 to the bottom of the body of water is obtained (figure 2C). In an embodiment, shown in figure 7, the basement is provided with at least one lower portion apt to make one or more steps useful to fit the conformation of the bed of the body of water.

In the last (from the bottom) structural element 12 of the pillar 10, or head structural element, is inserted the filling material up to realize a firm flat surface 50 apt to be the base for any kind of building.

As shown in said figure 7, adjacent to the pillar 10, already made by this time, it is possible to build a second pillar 20 proceeding as for the above disclosed first pillar 10. In particular, one or more side walls of the basement 11 and of each structural element 12 provided with joining means 13 apt to couple with corresponding joining means 23. More in detail, the joining means 13 and 23 are apt to lead the placement of the basement 21 and of structural elements 22 of the second pillar 20 (figure 7).

The joining means 13 and 23 are side protrusions 13 and cuts 23. Though in the disclosed figures the first pillar has side protrusions 13 and the second pillar has cuts 23 in which the protrusions 13 themselves vertically slide during the placement of the respective structural elements, the invention may also provide to previously install the pillar with cuts and then the pillar with protrusions. By placing several pillars side by side, a continuous flat surface 50 of the desired dimensions can be realized. This one can also be realized by building a series of individually, or in groups, spaced pillars connected through crosspieces, solution not shown in figures.

In figures from 8 to 12 is shown a different configuration of the basements 11' and 21' and of their structural elements 12' and 22', as an alternative solution to the one shown in figures from 1 to 7. In particular, in this case the cuts 13' and the protrusions 23' couple together to form a dovetail joint. In figures from 13 to 16 are shown further configurations of the basements 11" and 21" and of their structural elements 12" and 21", having a circle-like section.

It is stated that modifications and arrangements with no need of further research could be considered equivalent to the specific embodiment described above. Means and materials to realize the disclosed functions could be different always within the limits of the claims.

## Claims

1. Method for the realization of an artificial island, an embankment, a pier, a breakwater, a platform or a similar structure in a body of water, comprising the phases of:
- locating, about the site where has to be installed, a floating hollow basement (11) made of a bottom (15) and side walls (14) and provided with an upper aperture (18),
- laying down from the top a filling material (35) in the internal volume of said basement (11) through said upper aperture (18) until the basement (11) itself is partly under water,
- placing, on said lowered basement (11), a hollow structural element (12) made of side walls (14), an upper aperture and a lower aperture (16), the walls of the structural element (12) and the walls (14) of the basement (11) having the same dimensions and same shape in plan,
- laying down filling material (35) from the top into said structural element (12) so that said basement (11) and the structural element (12) lower again and are partly under water,
- repeating the previous phases until the bottom of the basement (11) gets in contact with the bottom of the body of water,
- **characterized in that** said filling material is a conglomerate material such as concrete, bitumen and waste material of various industrial processes; and
by filling, through the head structural element (12), the pillar (10) made of basement (11) and structural elements (12) with filling material (35) until a firm flat surface (50) is obtained, wherein the method further provides a plurality of adjacent pillars (10), said plurality of pillars (10) being joined to each other by joining means (13', 23') apt to lead the placement of the structural elements of the adjacent pillars (10), like, for instance, in a dovetail joint, said plurality of pillars (10) composing a continuous firm flat surface and wherein said joining means provide at least one longitudinal cut (23) in a pillar (10) apt to lead the side protrusions (13) of the structural elements (12) of the pillar (10) built adjacent to it.

2. Artificial island, embankment, pier, breakwater, platform or similar structure to be installed in any sort of body of water , comprising pillars (10), each comprising:
- a hollow floating basement (11), made of a bottom (15), shaped side walls (14) and at least one upper aperture (18) through which is entered a filling material (35) in order to cause a partial submersion of the basement (11) itself,
- one or more hollow structural elements (12), made of side walls (14), which are placed on top of the basement (11), one on top of the following, said structural elements (12) taking within, from the top, a filling material (35) up to obtain a firm flat surface (50) at the desired height level, the walls of the structural element (12) and the walls (14) of the basement (11) having the same dimensions and same shape in plan,
**characterized in that** said pillars are provided with joining means (13', 23') apt to couple with corresponding joining means (13', 23') of adjacent pillars (10) in order to lead the placement of the structural elements (12) of said adjacent pillar (10), like, for instance, in a dovetail joint (13' and 23'), and wherein said joining means provide at least one longitudinal cut (23) in a pillar (10) apt to lead the side protrusions (13) of the structural elements (12) of the pillar (10) built adjacent to it.

3. Artificial island, embankment, pier, breakwater, platform or similar structure according to claim 2 comprising a plurality of adjacent pillars (10) whose head structural elements (12) compose a continuous firm flat surface (50), that can result under or over the water level, on the top of said pillars (10) being possible to built a foundation, with or without reinforced structure, on which can be built any other kind of structure.

4. Artificial island, embankment, pier, breakwater, platform or similar structure according to claim 3, wherein said structural elements (12) of said pillar (10) are provided with reference means apt to facilitate their placement one on top of the other, said basement and every structural elements having the same measures and the same shape in top view.

5. Artificial island, embankment, pier, breakwater, platform or similar structure according to claim 2, wherein said basement (11) and said structural elements (12) are made of any pure or compound material, for instance sheet metal, plastics, concrete material, any conglomerate material, even reinforced, stone material, etc., said filling material (35) being constituted of concrete material, any conglomerate material, waste material of various industrial processes, bitumen, any binding material or other materials, provided by a container or by any other means.

6. Artificial island, embankment, pier, breakwater, platform or similar structure according to claim 2, wherein said basement (11) has at least one beneath portion apt to realize one or more steps useful to fit the conformation of the bottom (30) of the body of water, the bottom of said basement (11) being provided with fastening means (36).

7. Artificial island, embankment, pier, breakwater, platform or similar structure according to claim 2, wherein said structural elements (12) are just partly filled with said filling material (35) in order to realize a partially hollow pillar (10).

8. Artificial island, embankment, pier, breakwater, platform or similar structure according to claim 3, whereas single basements, pillars or groups of them form a base for building structures such as bridges, roads, etc.

## Patentansprüche

1. Verfahren zur Realisierung einer künstlichen Insel, eines Deichs, eines Piers, eines Wasserbrechers, einer Plattform oder einer ähnlichen Struktur in einer Wassermenge, umfassend die Phasen:
- Anordnen eines schwimmenden hohlen Unterbaus (11), der aus einem Boden (15) und Seitenwänden (14) hergestellt ist und mit einer oberen Öffnung (18) versehen ist, in der Nähe des Orts, wo die Aufstellung sein soll,
- Einbringen eines Füllmaterials (35) von oben in das Innenvolumen des Unterbaus (11) durch die obere Öffnung (18), bis sich der Unterbau (11) selbst teilweise unter Wasser befindet,
- Platzieren eines hohlen Strukturelements (12), das aus Seitenwänden (14), einer oberen Öffnung und einer unteren Öffnung (16) hergestellt ist, auf dem abgesenkten Unterbau (11), wobei die Wände des Strukturelements (12) und die Wände (14) des Unterbaus (11) in Draufsicht dieselben Abmessungen und dieselbe Form aufweisen,
- Einbringen von Füllmaterial (35) in das Strukturelement (12) von oben, so dass sich der Unterbau (11) und das Strukturelement (12) wiederum absenken und sich teilweise unter Wasser befinden,
- Wiederholen der vorhergehenden Phasen bis der Boden des Unterbaus (11) in Berührung mit dem Boden der Wassermenge kommt,
- **dadurch gekennzeichnet, dass** das Füllmaterial ein Konglomeratmaterial ist, wie zum Beispiel Beton, Bitumen und Abfallprodukte von verschiedenen industriellen Prozessen; und
**gekennzeichnet durch** Füllen der Säule (10), die aus Unterbau (11) und Strukturelementen (12) hergestellt ist, **durch** das oberste Strukturelement (12) mit Füllmaterial (35), bis eine baufeste ebene Oberfläche (50) erhalten wird, wobei das Verfahren weiter eine Mehrzahl von Nachbarsäulen (10) bereitstellt, wobei die Mehrzahl von Säulen (10) **durch** Verbindungseinrichtungen (13', 23') miteinander verbunden werden, die dazu geeignet sind, die Platzierung der Strukturelemente der Nachbarsäulen (10) ähnlich wie zum Beispiel in einer Schwalbenschwanzverbindung zu führen, wobei die Mehrzahl von Säulen (10) eine durchgehende baufeste ebene Oberfläche bildet und wobei die Verbindungseinrichtungen mindestens einen längs verlaufenden Einschnitt (23) in einer Säule (10) bereitstellen, der dazu geeignet ist, die Seitenvorsprünge (13) der Strukturelemente (12) der Säule (10), die an ihn angrenzend erstellt sind, zu führen.

2. Künstliche Insel, Deich, Pier, Wasserbrecher, Plattform oder ähnliche Struktur, die in einer beliebigen Art von Wassermenge aufgestellt werden soll, umfassend Säulen (10), die jeweils umfassen:
- einen hohlen schwimmenden Unterbau (11), der aus einem Boden (15), Formseitenwänden (14) und mindestens einer oberen Öffnung (18) hergestellt ist, durch welche ein Füllmaterial (35) eingetragen ist, um ein teilweises Untertauchen des Unterbaus (11) selbst zu bewirken,
- ein oder mehrere hohle Strukturelemente (12), die aus Seitenwänden (14) hergestellt sind, die oben auf dem Unterbau (11) platziert sind, eines oben auf dem Nächsten, wobei die Strukturelemente (12) im Innern von oben ein Füllmaterial (35) aufnehmen, um eine baufeste ebene Oberfläche (50) in dem gewünschten Höhenniveau zu erhalten, wobei die Wände des Strukturelements (12) und die Wände (14) des Unterbaus (11) in Draufsicht dieselben Abmessungen und dieselbe Form aufweisen,
**dadurch gekennzeichnet, dass** die Säulen mit Verbindungseinrichtungen (13', 23') versehen sind, die dazu geeignet sind, mit entsprechenden Verbindungseinrichtungen (13', 23') von Nachbarsäulen (10) zu koppeln, um die Platzierung der Strukturelemente (12) der Nachbarsäule (10) zu führen, ähnlich zum Beispiel wie in einer Schwalbenschwanzverbindung (13'und 23'), und wobei die Verbindungseinrichtungen mindestens einen längs verlaufenden Einschnitt (23) in einer Säule (10) bereitstellen, der dazu geeignet ist, die Seitenvorsprünge (13) der Strukturelemente (12) der Säule (10), die an ihn angrenzend erstellt sind, zu führen.

3. Künstliche Insel, Deich, Pier, Wasserbrecher, Plattform oder ähnliche Struktur nach Anspruch 2, umfassend eine Mehrzahl von Nachbarsäulen (10), deren oberste Strukturelemente (12) eine durchgehende baufeste ebene Oberfläche (50) bilden, die sich unter oder über dem Wasserspiegel ergeben kann, wobei oben auf den Säulen (10) die Möglichkeit besteht, ein Fundament zu erstellen, mit oder ohne verstärkte Struktur, auf dem eine beliebige andere Art von Struktur erstellt werden kann.

4. Künstliche Insel, Deich, Pier, Wasserbrecher, Plattform oder ähnliche Struktur nach Anspruch 3, wobei die Strukturelemente (12) der Säule (10) mit Bezugseinrichtungen versehen sind, die dazu geeignet sind, ihre Platzierung aufeinander zu erleichtern, wobei der Unterbau und alle Strukturelemente bei Ansicht von oben dieselben Ausmaße und dieselbe Form aufweisen.

5. Künstliche Insel, Deich, Pier, Wasserbrecher, Plattform oder ähnliche Struktur nach Anspruch 2, wobei der Unterbau (11) und die Strukturelemente (12) aus einem beliebigen Rein- oder Verbundstoff beispielsweise Blech, Kunststoffe, Betonmaterial, einem beliebigen, selbst verstärkten, Konglomeratmaterial, Steinmaterial und so weiter hergestellt sind, wobei das Füllmaterial (35) aus Betonmaterial, einem beliebigen Konglomeratmaterial, Abfallprodukten von verschiedenen industriellen Prozessen, Bitumen, einem beliebigen Bindematerial oder anderen Materialien gebildet ist, die durch einen Behälter oder durch eine beliebige andere Einrichtung bereitgestellt werden.

6. Künstliche Insel, Deich, Pier, Wasserbrecher, Plattform oder ähnliche Struktur nach Anspruch 2, wobei der Unterbau (11) mindestens einen unteren Teil aufweist, der dazu geeignet ist, einen oder mehrere Stufen zu realisieren, die nützlich sind, um sich der Gestaltung des Bodens (30) der Wassermenge anzupassen, wobei der Boden des Unterbaus (11) mit Befestigungseinrichtungen (36) versehen ist.

7. Künstliche Insel, Deich, Pier, Wasserbrecher, Plattform oder ähnliche Struktur nach Anspruch 2, wobei die Strukturelemente (12) lediglich teilweise mit dem Füllmaterial (35) gefüllt sind, um eine teilweise hohle Säule (10) zu realisieren.

8. Künstliche Insel, Deich, Pier, Wasserbrecher, Plattform oder ähnliche Struktur nach Anspruch 3, wohingegen einzelne Unterbauten, Säulen oder Gruppen von ihnen eine Basis zum Erstellen von Strukturen, wie zum Beispiel Brücken, Straßen und so weiter, bilden.

## Revendications

1. Procédé de construction d'une île artificielle, d'une digue, d'une jetée, d'un brise-lames, d'une plate-forme ou d'une structure semblable dans un plan d'eau, comprenant les phases de :
- positionnement, autour du site d'installation prévu, d'une fondation creuse flottante (11) composée d'un fond (15) et de parois latérales (14) et dotée d'une ouverture supérieure (18),
- dépôt par le haut d'un matériau de remblai (35) dans le volume interne de ladite fondation (11) par ladite ouverture supérieure (18) jusqu'à ce que la fondation (11) même soit partiellement submergée,
- placement, sur ladite fondation enfoncée (11), d'un élément structurel creux (12) composé de parois latérales (14), d'une ouverture supérieure et d'une ouverture inférieure (16), les parois de l'élément structurel (12) et les parois (14) de la fondation (11) ayant les mêmes dimensions et la même forme en plan,
- dépôt d'un matériau de remblai (35) par le haut dans ledit élément structurel (12) de telle sorte que ladite fondation (11) et l'élément structurel (12) s'enfoncent davantage et soient partiellement submergés,
- répétition des phases précédentes jusqu'à ce que le fond de la fondation (11) fasse contact avec le fond du plan d'eau,
- **caractérisé en ce que** ledit matériau de remblai est un matériau de conglomérat tel que béton, bitume, et matériaux de déchets de divers processus industriels ; et
par le remplissage, à travers ledit élément structurel de tête (12), du pilier (10) composé de la fondation (11) et des éléments structurels (12) avec un matériau de remblai (35) jusqu'à l'obtention d'une surface plate ferme (50), le procédé fournissant en outre une pluralité de piliers adjacents (10), les piliers de ladite pluralité de piliers (10) étant joints les uns aux autres par des moyens de jointure (13', 23') en mesure de guider le placement des éléments structurels des piliers adjacents (10), comme, par exemple, un joint à queue d'aronde, ladite pluralité de piliers (10) composant une surface plate ferme continue et dans lequel lesdits moyens de jointure laissent au moins une découpe longitudinale (23) dans un pilier (10) en mesure de guider les saillies latérales (13) des éléments structurels (12) du pilier (10) construits à sa proximité.

2. Ile artificielle, digue, jetée, brise-lames, plate-forme ou structure semblable destiné à être installé dans n'importe quel type de plan d'eau, comprenant des piliers (10), comprenant chacun :
- une fondation creuse flottante (11) consistant en un fond (15), des parois latérales profilées (14) et au moins une ouverture supérieure (18) par laquelle est introduit un matériau de remblai (35) afin d'entraîner une submersion partielle de la fondation (11) même,
- un ou plusieurs éléments structurels creux (12), composés de parois latérales (14), qui sont placés par-dessus la fondation (11), l'un au-dessus de l'autre, lesdits éléments structurels (12) recevant, par le haut, un matériau de remblai (35) jusqu'à l'obtention d'une surface plate ferme (50) à la hauteur souhaitée, les parois de l'élément structurel (12) et les parois (14) de la fondation (11) ayant les mêmes dimensions et la même forme en plan,
**caractérisé en ce que** lesdits piliers sont dotés de moyens de jointure (13', 23') en mesure de s'accoupler à des moyens de jointure correspondants (13', 23') de piliers adjacents (10) afin de guider le placement des éléments structurels (12) dudit pilier adjacent (10), comme, par exemple, un joint à queue d'aronde (13' et 23'), et dans lequel lesdits moyens de jointure laissent au moins une découpe longitudinale (23) dans un pilier (10) en mesure de guider les saillies latérales (13) des éléments structurels (12) du pilier (10) construits à sa proximité.

3. Ile artificielle, digue, jetée, brise-lames, plate-forme ou structure semblable selon la revendication 2, comprenant une pluralité de piliers adjacents (10) dont les éléments structurels de tête (12) composent une surface plate ferme continue (50), qui peut se retrouver en dessous ou au-dessus du niveau de l'eau, une fondation pouvant être construite au-dessus desdits piliers (10), avec ou sans structure de renforcement, n'importe quel autre type de structure pouvant être construit sur la fondation.

4. Ile artificielle, digue, jetée, brise-lames, plate-forme ou structure semblable selon la revendication 3, dans lequel lesdits éléments structurels (12) dudit pilier (10) sont dotés de moyens de référence capables de faciliter leur placement les uns au dessus des autres, ladite fondation et tous les éléments structurels ayant les mêmes mesures et la même forme en vue de dessus.

5. Ile artificielle, digue, jetée, brise-lames, plate-forme ou structure semblable selon la revendication 2, dans lequel ladite fondation (11) et lesdits structurels de tête (12) sont réalisés en n'importe quel matériau pur ou composé, par exemple, tôle métallique, plastique, matériau de béton, n'importe quel matériau de conglomérat, même renforcé, matériau de pierres, etc., ledit matériau de remblai (35) étant constitué de matériau de béton, n'importe quel matériau de conglomérat, matériau de déchets de divers processus industriels, bitume, n'importe quel matériau liant ou autres matériaux, fournis par un conteneur ou n'importe quel autre moyen.

6. Ile artificielle, digue, jetée, brise-lames, plate-forme ou structure semblable selon la revendication 2, dans lequel ladite fondation (11) comporte au moins une partie sous-jacente capable de réaliser une ou plusieurs étapes utiles pour épouser le profil du fond (30) du plan d'eau, le fond de ladite fondation (11) étant doté de moyens de fixation (36).

7. Ile artificielle, digue, jetée, brise-lames, plate-forme ou structure semblable selon la revendication 2, dans lequel lesdits éléments structurels (12) sont juste partiellement remplis avec ledit matériau de remblai (35) afin de réaliser un pilier partiellement creux (10).

8. Ile artificielle, digue, jetée, brise-lames, plate-forme ou structure semblable selon la revendication 3, dans lequel des fondations, piliers uniques ou des groupes de ceux-ci forment une base en vue de la construction de structures telles que des ponts, des routes, etc.
